# EUROPEAN PATENT APPLICATION

(11) **EP 2 793 359 A1**
(43) Date of publication of application: **22.10.2014**
(21) Application number: 14706767.2
(22) Date of filing: 09.01.2014
(51) Int. Cl.: H02J 17/00

(54) **WIRELESS CHARGER CAPABLE OF AUTOMATIC POSITION ADJUSTMENT AND CHARGING METHOD USING SAME**

(30) Priority: 06.03.2013 KR 20130023705; 10.05.2013 KR 20130053354; 04.09.2013 KR 20130106137
(71) Applicant: Hanshinkijeon Co., Ltd., Yeongdeungpo-gu Seoul 150-102 (KR)
(72) Inventor: MOON, Myung-Il, Gwangmyeong-si Gyeonggi-do 423-759 (KR)
(74) Representative: Rüger, Barthelt & Abel
(86) International application number: PCT/KR2014/000238
(87) International publication number: WO 2014/137066

(57) **Abstract**

Provided are an automatically position adjustable wireless charger and a charging method using the same, the wireless charger, including: a plurality of power transmission coil units having a power transmission coil for generating an induced current in a power reception coil of a portable terminal using electromagnetic induction; a power transmission circuit unit for supplying a current to the power transmission coil; a drive unit for moving a position of the power transmission coil unit; a power transmission unit for enabling the plurality of power coil units to be eccentrically rotated by transmitting power from the drive unit to the plurality of power coil units; and a control unit for stopping the drive unit and enabling the current to be supplied to the power transmission coil when a voltage applied to the power transmission coil is reduced by the power transmission coil being aligned at the power reception coil.

## Description

### BACKGROUND OF THE INVENTION

### Field of the Invention

The present invention relates to a wireless charger and a charging method using the same, more particularly, to an automatically position adjustable wireless charger and a charging method using the same, which has the improved convenience of charging.

### Description of the Related Arts

In general, each of separate contact terminals is formed at the outside of each of a charging device and a battery, and the charging device and battery are electrically connected by connecting the two contact terminals to each other. However, when the contact terminals protrude to the outside, it is problematic in that the appearance of the product is not good, and the outside of the contact terminals is contaminated by foreign substances, thus causing a problem that a contact state may easily become bad.

Also, when a short circuit is generated at the battery due to a user's carelessness or the battery is exposed to moisture, charging energy may be easily destroyed.

In order to solve the problem of the contact type charging method, a wireless charging technology for charging a charging device and a battery in a non-contact type has been suggested.

The wireless charging technology is a technology for transmitting power necessary for wirelessly charging the battery without use of a power cord or a charging connector. In the past, the technology was limitedly applied only to an electric toothbrush, a radiotelephone for home use, a power tool and the like.

However, according to the explosive increase of a recent smart phone market size, the use of the wireless charging technology is being expansively accelerated.

A smart phone enables a user to freely enjoy plentiful contents and multimedia at any time, but has a limit that the hours of use is short due to the restriction of a battery capacity. A situation of the wireless charging technology in the smart phone market has been largely changed with the launching of a smart phone corresponding to wireless charging and products in which a wireless charging module targeted to wirelessly charge a portable phone or a smart phone is mounted have been consecutively announced in domestic and foreign countries.

Since the Wireless Power Consortium (WPC) targeted to extensively adopt the standard size of a non-contact mode announced the first standard specification for an output device of 5W or below, companies who have joined this organization has been continuously increasing. According to the adoption of smart phones, it has been expected that the wireless charging technology whose market has been increasing will be applied to devices having large output, such as digital cameras, tablet PCs, monitors, digital TVs and the like.

Among various technologies which enable wireless charging to be performed, an electromagnetic induction method is superior in terms of commercialization and merchandising thereof.

The electromagnetic induction method uses an electromagnetic energy combination generated among coil lines which are wound several times.

This is based on the Faraday's Law that a magnetic field generated by a coil in which an alternating current (AC) or a high-frequency current flows produces an electromotive force (EMF) at an output terminal of an adjacent coil. When a general cellular phone, a smart phone, a digital camera, a tablet PC, a monitor, or a notebook in which a wireless charging module is mounted is placed on a charging surface of a wireless charger composed a power transmission module for wireless charging, an analog circuit and a power circuit functioning to charge, a control circuit, a rectifier circuit, a charging circuit and the like are operated, thus enabling a battery mounted inside the device to be charged.

In this configuration, a position of a power transmission coil positioned just below the charging surface of the wireless charger becomes a major variable.

However, according to the conventional art, it is problematic in that charging cannot be carried out when a position between a power transmission coil of the wireless charger and a power reception coil of a device to be charged is accurately fixed.

### SUMMARY OF THE INVENTION

Accordingly, the present invention has been made keeping in mind the above problems occurring in the related art. An aspect of embodiments of the present invention provides an automatically position adjustable wireless charger and a charging method using the same, which is configured such that a portable terminal to be charged is fixed to the automatically position adjustable wireless charger, a power transmission coil and a power reception coil are aligned by moving a power transmission coil unit of the automatically position adjustable wireless charger so that a power transmission coil and a power reception coil can be adjusted to enable a position for optimum electromagnetic induction to be found, and thus a user can more easily charge the portable terminal without a need to move the portable terminal for charging again.

Also, another aspect of embodiments of the present invention provides an automatically position adjustable wireless charger and a charging method using the same, which is configured such that a hydraulic cylinder method or a gas cylinder method rather than a motor method is used to enable a power transmission unit to be moved, and thus vibration is minimized so that a power transmission coil and a power reception coil can be more accurately aligned, thereby improving charging efficiency.

According to an aspect of the present invention, there is provided an automatically position adjustable wireless charger, including: a plurality of power transmission coil units having a power transmission coil for generating an induced current in a power reception coil of a portable terminal using electromagnetic induction; a power transmission circuit unit for supplying a current to the power transmission coil; a drive unit for moving a position of the power transmission coil unit; a power transmission unit for enabling the plurality of power coil units to be eccentrically rotated by transmitting power from the drive unit to the plurality of power coil units; and a control unit for stopping the drive unit and enabling the current to be supplied to the power transmission coil when a voltage applied to the power transmission coil is reduced by the power transmission coil included in any one of the plurality of power transmission coil units being aligned at the power reception coil.

The control unit may control the drive unit to move the power transmission coil units so that the power transmission coil can be positioned at a position corresponding to the power reception coil.

The drive unit may include a drive motor.

The drive unit may include a pump; and a cylinder for driving the power transmission unit by receiving a voltage supplied from the pump.

The cylinder may be a hydraulic cylinder or a gas cylinder.

The plurality of power transmission coil units may be composed of a first power transmission coil unit including the power transmission coil; and a second power coil transmission coil unit including the power transmission coil.

A position of the first power transmission coil unit and a position of the second power transmission coil unit may be moved by the drive unit.

The power transmission unit may include a screw for moving the power transmission coil units.

The power transmission coil may be configured to be geometrically symmetric with respect to the power reception coil.

The automatically position adjustable wireless charger may further include: a portable terminal holder including a fixing magnet for fixing the portable terminal; and a cover unit for covering an upper portion of the portable terminal.

The automatically position adjustable wireless charger may be configured in an integral form in which it is embedded inside a vehicle.

The automatically position adjustable wireless charger may be composed of a portable device which can be detached and attached to the vehicle.

According to another aspect of the present invention, there is provided a charging method using an automatically position adjustable wireless charger, including: a first step of a power transmission circuit unit generating an induced current in a power reception coil of a portable terminal by applying a current to a power transmission coil included in a plurality of power transmission unit; a second step of a power transmission unit transmitting power to the plurality of power transmission units from a drive unit so that the plurality of power coil units can be eccentrically rotated; a third step of a control unit stopping the drive unit when a voltage applied to the power transmission coil is reduced by the power transmission coil included in any one of the plurality of power transmission coil units being aligned at the power reception coil; and a fourth step of the control unit controlling the power transmission circuit unit to enable a current to be applied to the power transmission coil.

The third step may be performed by the control unit controlling the drive unit to move a position of the power transmission coil unit so that the power transmission coil can be positioned at a position corresponding to the power reception coil.

### BRIEF DESCRIPTION OF THE DRAWINGS

The accompanying drawings are included to provide a further understanding of the present invention, and are incorporated in and constitute a part of this specification. The drawings illustrate exemplary embodiments of the present invention and, together with the description, serve to explain principles of the present invention. In the drawings:
FIG. 1 is a block diagram showing an automatically position adjustable wireless charger according to one embodiment of the present invention;
FIGS. 2 and 3 are perspective views illustrating the automatically position adjustable wireless charger according to one embodiment of the present invention;
FIG. 4 is a view illustrating a power transmission coil unit according to one embodiment of the present invention;
FIGS. 5 and 6 are views for explaining a position moving method of the power transmission coil unit of the automatically position adjustable wireless charger according to one embodiment of the present invention;
FIGS. 7 and 8 are perspective views illustrating an automatically position adjustable wireless charger according to another embodiment of the present invention;
FIG. 9 is a perspective view illustrating an outward form of the automatically position adjustable wireless charger according to another embodiment of the present invention;
FIG 10 is a view illustrating a state in which a portable terminal is mounted to the automatically position adjustable wireless charger according to one embodiment of the present invention;
FIGS. 11 and 12 are views illustrating a method of mounting the automatically position adjustable wireless charger according to one embodiment of the present invention to a vehicle; and
FIG. 13 is a view illustrating an outward form of the automatically position adjustable wireless charger according to another embodiment of the present invention.

### DETAILED DESCRIPTION OF THE INVENTION

Hereinafter, preferred embodiments of the present invention will be described in detail with reference to the accompanying drawings. In the following description, it is to be noted that, when the functions of conventional elements and the detailed description of elements related with the present invention may make the gist of the present invention unclear, a detailed description of those elements will be omitted. Further, it should be understood that the shape and size of the elements shown in the drawings may be exaggeratedly drawn to provide an easily understood description of the structure of the present invention rather than reflecting the actual sizes of the corresponding elements.

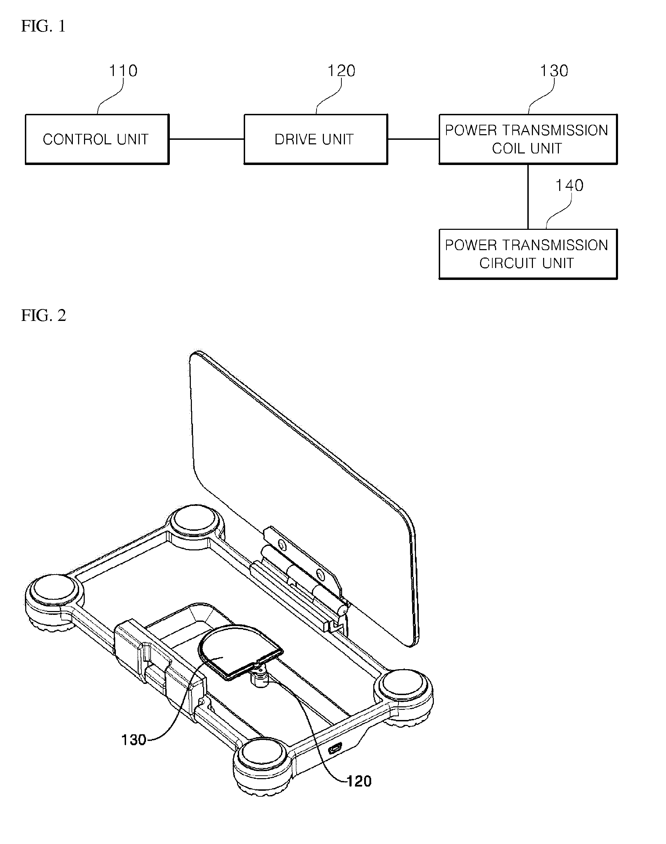

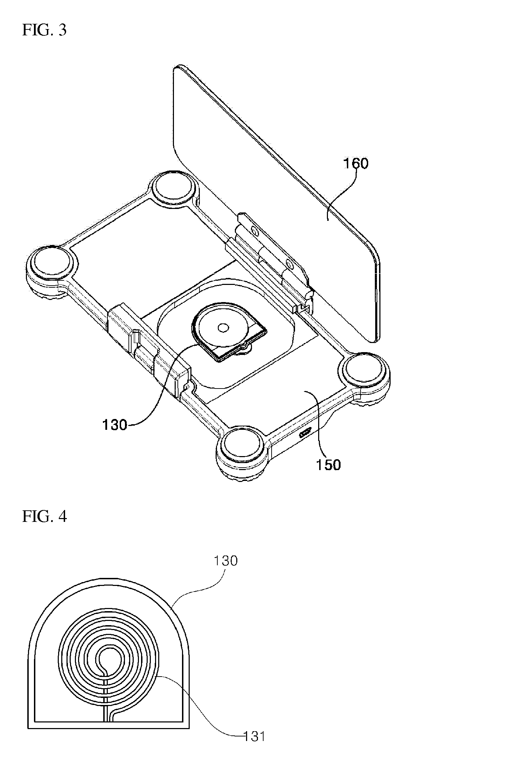

FIG. 1 is a block diagram showing an automatically position adjustable wireless charger according to one embodiment of the present invention, FIGS. 2 and 3 are perspective views illustrating the automatically position adjustable wireless charger according to one embodiment of the present invention, and FIG. 4 is a view illustrating a power transmission coil unit according to one embodiment of the present invention.

The configuration of an automatically position adjustable wireless charger according to one embodiment of the present invention will be described with reference to FIGS. 1 to 4.

As illustrated in FIG. 1, the automatically position adjustable wireless charger according to one embodiment of the present invention may include: a control unit 110, a drive unit 120, a power transmission coil unit 130, and a power transmission circuit unit 140. Furthermore, it may further include a power transmission unit.

The power transmission coil unit 130 includes a power transmission coil.

The power transmission coil generates an induced current in a power reception coil of a portable terminal using electromagnetic induction.

The power transmission coil may be provided inside the power coil unit 130, and may be formed in a circular coil form or a spiral coil form, or may be composed in various forms such as a quadrangular coil form, a zigzag type coil form and the like.

Also, the power transmission coil may be configured to be geometrically symmetric with respect to a power reception coil of a portable terminal intended to be charged.

As illustrated in FIG. 2, the drive unit 120 is connected to the power transmission coil unit 130 to move a position of the power transmission coil unit 130.

At this time, the drive unit 120 may include a drive motor so as to move a position of the power transmission coil unit 130, and may further include a screw so as to move the position of the power transmission coil unit 130 horizontally.

Furthermore, in another embodiment, the drive unit 120 may include a pump so as to move the power transmission coil unit 130 by receiving a voltage applied from the pump.

The control unit 110 may control the drive unit 120 to move the position of the power transmission coil unit 130 so that the power transmission coil of the power transmission coil unit 130 is aligned with the power reception coil of the portable terminal to be charged.

More specifically, the control unit 110 controls the drive unit 120 to enable the drive unit 120 to be stopped when a voltage applied to the power transmission coil is reduced by the power transmission coil being aligned with the power reception coil.

Accordingly, the power transmission coil of the power transmission coil unit 130 is positioned at an optimum position corresponding to the power reception coil of the portable terminal.

Meanwhile, the power transmission coil unit 130 is eccentrically rotated or performs a straight line motion by control of the control unit 110 so that the power transmission coil can be aligned with the power reception coil.

The power transmission circuit unit 140 applies a current to the power transmission coil. At this time, the power transmission circuit unit 140 may be configured to apply the current to the power transmission coil by the control of the control unit 110 when the power transmission coil is aligned with the power reception coil.

As such, in a case where the automatically position adjustable wireless charger is configured such that the drive unit 120 is stopped when the voltage applied to the coil is reduced by the power transmission coil and the power reception coil being aligned, operation of the drive unit 120 is stopped at the time of being charged, thereby enabling a position to be fixed. Thus, a user is not need to move a portable terminal again for charging after fixing the portable terminal to be charged to the automatically position adjustable wireless charger, and the power transmission coil and the power reception coil are automatically adjusted to enable a position for optimum electromagnetic induction to be found so that higher charging efficiency can be expected.

As illustrated in FIG. 3, the automatically position adjustable wireless charger according to one embodiment of the present invention includes a portable terminal holder 150, and further includes a cover unit 160 for covering an upper portion of the portable terminal stably mounted to the portable terminal holder 150.

The portable terminal holder 150 may be configured to include a fixing magnet at the bottom thereof, and thus the fixing magnet may enable the portable terminal to be stably fixed to the portable terminal holder.

As illustrated in FIG. 4, the power transmission coil unit 130 according to the present embodiment of the invention may include a power transmission coil 131 in the inside thereof.

The power transmission coil 131 may be configured in a circular coil form or a spiral coil form or may be also configured in various forms such as a quadrangular coil form, a zigzag coil form and the like.

The power transmission coil 131 may be configured to be geometrically symmetric to the power reception coil of the portable terminal to be charged.

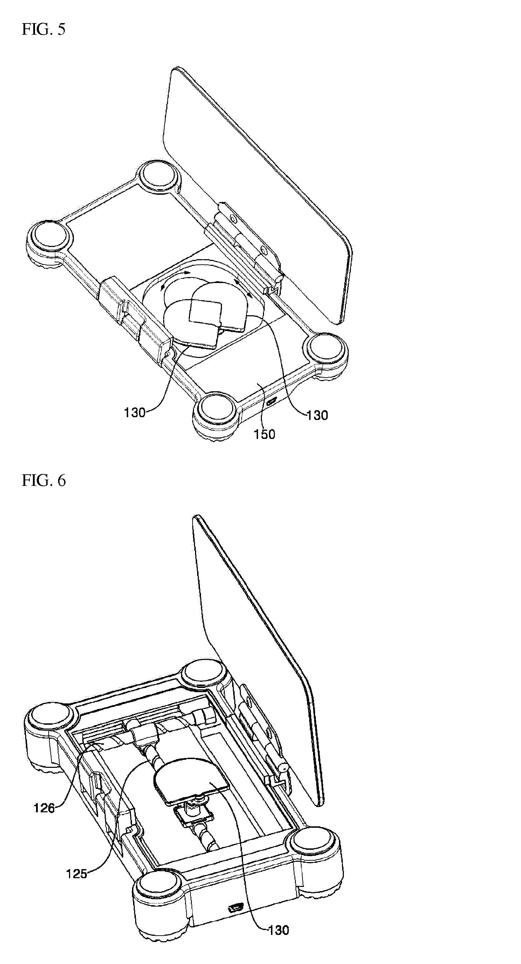

FIGS. 5 and 6 are views for explaining a position moving method of the power transmission coil unit of the automatically position adjustable wireless charger according to one embodiment of the present invention.

A method of charging a portable terminal using the automatically position adjustable wireless charger according to one embodiment will be described with reference to FIGS. 1 and 6.

First, the power transmission circuit unit 140 generates an induced current in the power reception coil of the portable terminal by applying the current to the power transmission coil included in the power transmission coil unit 130.

Then, the control unit 110 controls the drive unit 120 for moving a position of the power transmission coil unit 130 to enable the position of the power transmission coil unit 130 to be moved so that the power transmission coil unit can be positioned at a position corresponding to the power reception coil.

More specifically, the control unit 110 stops the drive unit 120 when a voltage applied to the power transmission coil is reduced by the power transmission coil and the power reception coil are being aligned.

At this time, the power transmission coil unit 130 may be configured to be eccentrically rotated and horizontally moved. To do so, screws 125, 126 as illustrated in FIG. 6 may be further included, and the power transmission coil unit 130 is horizontally moved on the screws by control of the control unit so that the power transmission coil of the power transmission coil unit 130 and the power reception coil of the portable terminal can be aligned, and thus the power transmission coil and the power reception coil are adjusted to enable a position for optimum electromagnetic induction to be found without a need to move the portable terminal fixed to the portable terminal holder 150.

Also, in another embodiment of the present invention, the drive unit may be composed of a hydraulic pump or an air cylinder.

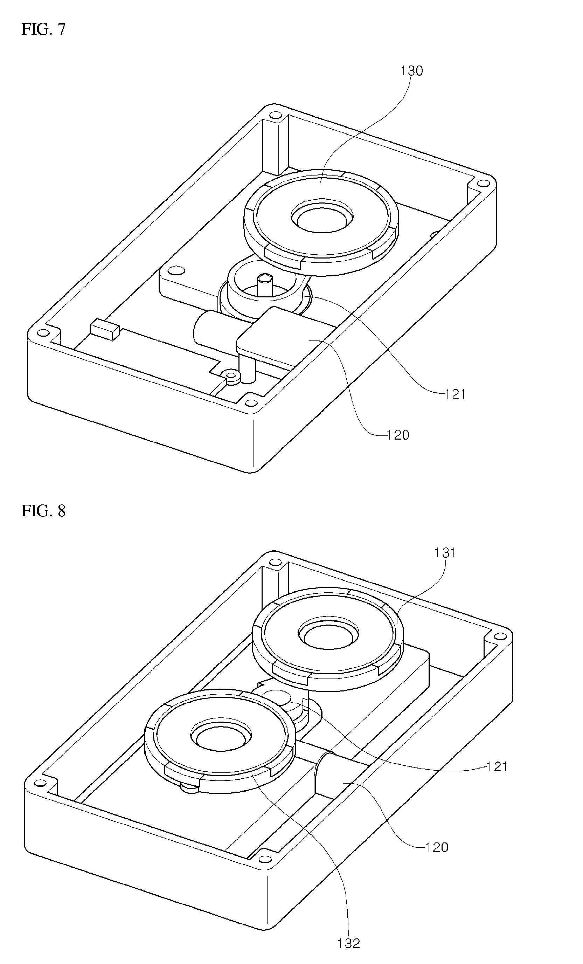

FIGS. 7 and 8 are perspective views illustrating an automatically position adjustable wireless charger according to another embodiment of the present invention.

As illustrated in FIG. 7, the automatically position adjustable wireless charger according to another embodiment of the present invention may be configured such that, as illustrated in FIG. 7, the drive unit 120 includes a pump and a cylinder for driving the power transmission unit 121 by receiving a voltage applied from the pump so that a position of the power transmission coil unit 130 can be moved through the power transmission unit 121.

At this time, a hydraulic cylinder or a gas cylinder may be used as the cylinder.

The power transmission unit 121 enables the power transmission unit 130 to be eccentrically rotated by functioning to transmit power from the drive unit 120 to the power transmission coil unit 130.

As such, when the power transmission coil unit 130 is eccentrically rotated by the power transmission unit 121, a position in which the power transmission coil is aligned at the power reception coil of a portable terminal to be charged can be easily found.

FIG. 8 is the perspective view illustrating the automatically position adjustable wireless charger according to another embodiment of the present invention, and more specifically, a view illustrating the embodiment of the automatically position adjustable wireless charger having a plurality of power transmission coil units.

As illustrated in FIG. 8, when the power transmission coil unit is composed of the first coil unit 131 and the second coil unit 132, the drive unit 120 enables a position of the first power transmission unit to be move through the power transmission unit 121.

The control unit stops the drive unit 120 when a voltage applied to the power transmission coil is reduced by the power transmission coil included in any one of the first power transmission coil unit 131 and the second power transmission coil unit 132 being aligned at the power reception coil.

That is, as such, in a case where the power transmission coil unit is composed of the first power transmission unit 131 and the second power transmission unit 132, the drive unit 120 is stopped when the power transmission coil included in any one of the first power transmission coil unit 131 and the second power transmission coil unit 132 is aligned at the power reception coil, and accordingly, the user can more easily perform wireless charging even if the wireless charger is positioned at any portion, and alignment can be rapidly performed compared to a case in which one power transmission coil unit is aligned with the power reception coil, thereby enabling starting of the charging to be rapidly carried out.

Meanwhile, the power transmission unit 121 functions to transmit power from the drive unit 120 to the first power transmission coil unit 131 and the second power transmission coil unit 132. At this time, the first power transmission coil unit 131 and the second power transmission coil unit 132 may be configured to be eccentrically rotated simultaneously or respectively.

As such, when the first power transmission coil unit 131 and the second power transmission coil unit 132 are configured to be eccentrically rotated respectively, it is effective in rapidly finding a position in which the power transmission coil is aligned at the power reception coil of the portable terminal to be charged.

Also, the embodiment in which the power transmission coil unit is composed of the first power transmission coil unit 131 and the second power transmission coil unit 132 has been explained in the above section, but two or more power transmission coil units may be configured.

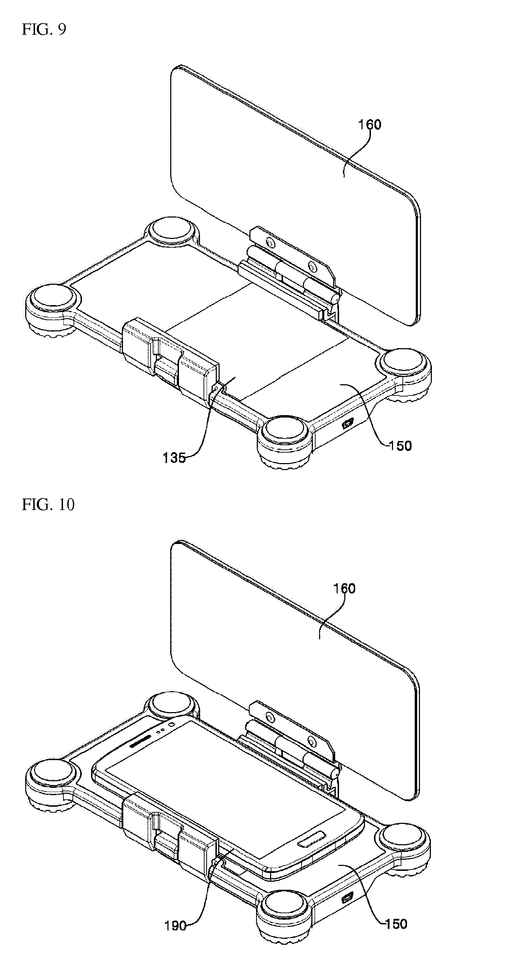

FIG. 9 is a perspective view illustrating an outward form of the automatically position adjustable wireless charger according to another embodiment of the present invention, and FIG 10 is a view illustrating a state in which a portable terminal is mounted to the automatically position adjustable wireless charger according to one embodiment of the present invention.

As illustrated in FIG. 9, a protective cover 135 for storage and protection of the power transmission coil unit is provided on an upper surface of the power transmission unit.

As illustrated in FIG. 10, a portable terminal 190 is stably fixed to the portable terminal holder 150, and the portable terminal 190 is fixed by a fixing magnet provided inside the portable terminal holder 150.

Also, the cover unit 160 for covering and protecting the portable terminal 190 stably fixed to the portable terminal holder 150 is provided.

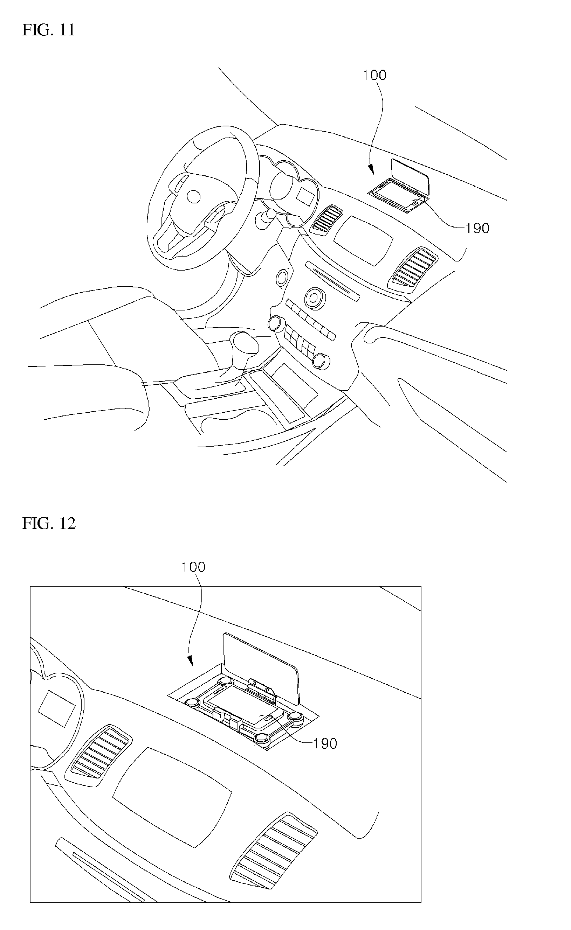

FIGS. 11 and 12 are views illustrating a method of mounting the automatically position adjustable wireless charger according to one embodiment of the present invention to a vehicle.

The automatically position adjustable wireless charger according to the present embodiment of the invention is constituted in a portable device form which can be detached and attached to the vehicle, and as illustrated in FIGS. 11 and 12, the automatically position adjustable wireless charger may be used in a state of being fixed to an upper end of a center fascia of the vehicle.

Also, since the automatically position adjustable wireless charger according to one embodiment of the present invention illustrated in FIGS. 11 and 12 is constituted in the portable device form which can be detached and attached to the vehicle, it can be freely moved and used in indoors and outdoors. Also, when it is used in the vehicle, it can be detached and attached inside the vehicle as needed, thereby enabling a user to charge a portable terminal more conveniently.

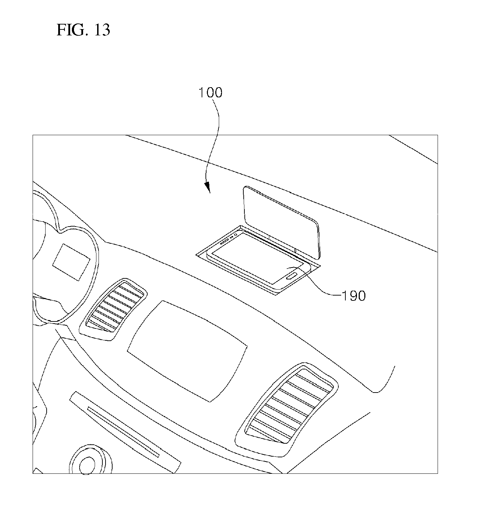

FIG. 13 is a view illustrating an outward form of the automatically position adjustable wireless charger according to another embodiment of the present invention, namely, a view illustrating the embodiment in which the automatically position adjustable wireless charger is integrally embedded inside a vehicle.

As illustrated in FIG. 13, when the automatically position adjustable wireless charger 100 is configured in an integral form in which it is embedded inside a vehicle, the portable terminal 190 is more stably fixed inside the automatically position adjustable wireless charger so that the user can conveniently charge the wireless charger by putting and keeping the portable terminal 190 into the automatically position adjustable wireless charger 100 integrally embedded inside the vehicle.

As set forth above, according to the present invention, the portable terminal to be charged is fixed to the automatically position adjustable wireless charger, a power transmission coil and a power reception coil are aligned by moving a power transmission coil unit of the automatically position adjustable wireless charger so that a user can more easily charge the portable terminal without a need to move the portable terminal for charging again.
Also, according to the present invention, the power transmission coil and the power reception coil are adjusted to enable a position for optimum electromagnetic induction to be found, thereby improving charging efficiency.

Also, , according to the present invention, a hydraulic cylinder method or a gas cylinder method rather than a motor method is used to enable a power transmission unit to be moved, and thus vibration is minimized so that a power transmission coil and a power reception coil can be more accurately aligned, thereby improving charging efficiency.

As previously described, in the detailed description of the invention, having described the detailed exemplary embodiments of the invention, it should be apparent that modifications and variations can be made by persons skilled without deviating from the spirit or scope of the invention. Therefore, it is to be understood that the foregoing is illustrative of the present invention and is not to be construed as limited to the specific embodiments disclosed, and that modifications to the disclosed embodiments, as well as other embodiments, are intended to be included within the scope of the appended claims and their equivalents.

## Claims

1. An automatically position adjustable wireless charger, comprising:
a plurality of power transmission coil units having a power transmission coil for generating an induced current in a power reception coil of a portable terminal using electromagnetic induction; a power transmission circuit unit for supplying a current to the power transmission coil; a drive unit for moving a position of the power transmission coil unit; a power transmission unit for enabling the plurality of power coil units to be eccentrically rotated by transmitting power from the drive unit to the plurality of power coil units; and a control unit for stopping the drive unit and enabling the current to be supplied to the power transmission coil when a voltage applied to the power transmission coil is reduced by the power transmission coil included in any one of the plurality of power transmission coil units being aligned at the power reception coil.

2. The wireless charger of claim 1, wherein the control unit controls the drive unit to move the power transmission coil units so that the power transmission coil can be positioned at a position corresponding to the power reception coil.

3. The wireless charger of claim 1, wherein the drive unit includes a drive motor.

4. The wireless charger of claim 1, wherein the drive unit includes a pump;
and a cylinder for driving the power transmission unit by receiving a voltage supplied from the pump.

5. The wireless charger of claim 4, wherein the cylinder is a hydraulic cylinder or a gas cylinder.

6. The wireless charger of claim 1, wherein the plurality of power transmission coil units are composed of a first power transmission coil unit including the power transmission coil; and a second power coil transmission coil unit including the power transmission coil.

7. The wireless charger of claim 6, wherein a position of the first power transmission coil unit and a position of the second power transmission coil unit are moved by the drive unit.

8. The wireless charger of claim 1, wherein the power transmission unit includes a screw for moving the power transmission coil units.

9. The wireless charger of claim 1, wherein the power transmission coil is configured to be geometrically symmetric with respect to the power reception coil.

10. The wireless charger of claim 1, further comprising: a portable terminal holder including a fixing magnet for fixing the portable terminal; and a cover unit for covering an upper portion of the portable terminal.

11. The wireless charger of claim 1, wherein the automatically position adjustable wireless charger is configured in an integral form in which it is embedded inside a vehicle.

12. The wireless charger of claim 1, wherein the automatically position adjustable wireless charger is composed of a portable device which can be detached and attached to the vehicle.

13. A charging method using an automatically position adjustable wireless charger, comprising: a first step of a power transmission circuit unit generating an induced current in a power reception coil of a portable terminal by applying a current to a power transmission coil included in a plurality of power transmission unit; a second step of a power transmission unit transmitting power to the plurality of power transmission units from a drive unit so that the plurality of power coil units can be eccentrically rotated; a third step of a control unit stopping the drive unit when a voltage applied to the power transmission coil is reduced by the power transmission coil included in any one of the plurality of power transmission coil units being aligned at the power reception coil; and a fourth step of the control unit controlling the power transmission circuit unit to enable a current to be applied to the power transmission coil.

14. The method of claim 13, wherein the third step is performed by the control unit controlling the drive unit to move a position of the power transmission coil unit so that the power transmission coil can be positioned at a position corresponding to the power reception coil.
